# EUROPEAN PATENT SPECIFICATION

(11) **EP 1 616 777 B1**
(45) Date of publication and mention of the grant of the patent: **28.11.2007**
(21) Application number: 05009432.5
(22) Date of filing: 29.04.2005
(51) Int. Cl.: B62D 33/03

(54) **A body for industrial vehicles**
Bauteil eines Lastkraftfahrzeuges
Elément de carrosserie de véhicule industriel

(30) Priority: 13.07.2004 IT VR20040114
(43) Date of publication of application: 18.01.2006
(73) Proprietor: Natali, Gianfranco, 6924 Sorengo (CH)
(72) Inventor: Natali, Gianfranco, 6924 Sorengo (CH)
(74) Representative: Ponchiroli, Simone

(56) References cited:
- DE-A1- 3 339 224
- DE-C- 823 848
- FR-A- 1 531 601

## Description

The present invention relates to a body for industrial vehicles, of the type having one or more panels S that can be opened, at which the ***bottom*** F of the body projects outwards forming a guard T which normally curves downwards.

In particular, the present invention is advantageously applied in dump bodies.

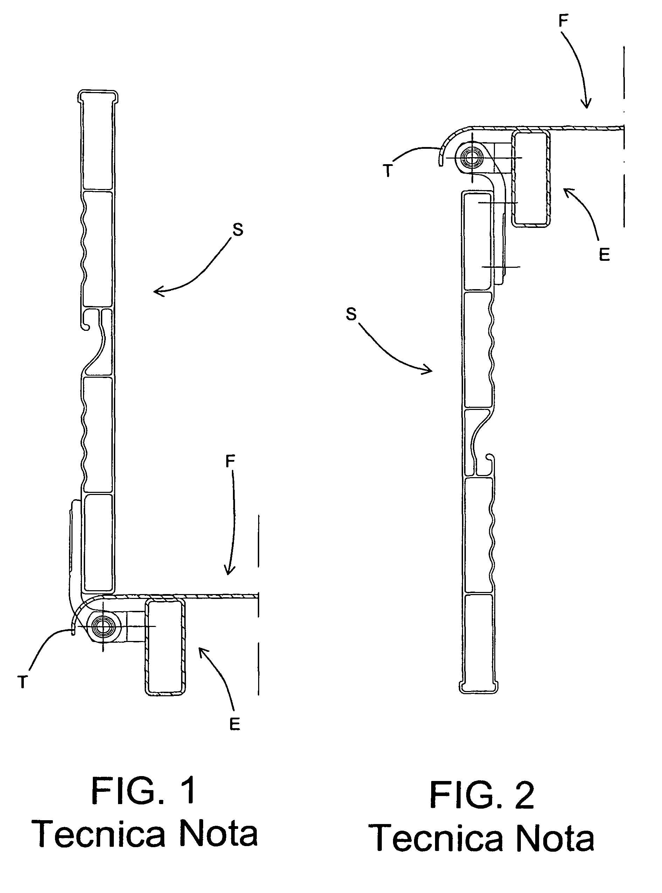

The guard (Figures 1 and 2) is, as indicated, a projecting continuation of the ***bottom*** of the body and has various functions.

Firstly, it facilitates the unloading of material from the body.

Secondly, in the case of hinged panels, it protects the panel when it is open, preventing the material unloaded from striking the panel.

In addition, the guard is made of a rigid material and protects the panel (made of a less resistant material) from any accidental impacts, for example during loading with fork-lift trucks, during manoeuvres against poles, walls, etc. It projects outwards further than the panel and, therefore, is the first thing to make contact with any obstacles.

Figures 1 and 2 illustrate a traditional guard combined with a hinged panel. In Figure 1 the panel is closed, whilst in Figure 2 it is open.

At present the guard consists of the same sheet of material as the ***bottom*** of the body, or part of it.

Moreover, close to the guard and under the ***bottom*** of the body there is a supporting element E to which, for example, it is possible to attach the panel hinges. The supporting element normally consists of a metal bar having the same thickness as the ***bottom**,* which is attached to the ***bottom*** by welding.

As illustrated in Figure 1, at the hinges of the panels the guard must also have notches which house the hinges that allow the panels to be placed in the closed position.

However, this known technology has several disadvantages.

Firstly, in order to have sufficient resistance to frontal impacts, the guard must be quite thick (around 4 - 5 mm if made of metal). As a result, the ***bottom*** of the body also has the same thickness, despite the fact that a significantly lower thickness would be sufficient for the body ***bottom*** function.

The oversizing of the ***bottom*** brings not only an evident rise in costs, but also an increase in the overall weight of the body with a consequent reduction in its carrying capacity.

Secondly, the guard made according to the prior art has an outer edge with a sharp edge (due to the cut of the sheet metal from which it is made) which is a hazard for operators, or which requires subsequent chamfering.

It should also be noticed that attaching the support to the ***bottom*** of the body currently requires significant labour, with the relative costs, since it is done by welding along its entire length.

It is also known by DE823 848*,* which disclosure caters the preamble features of claim 1, a body of industrial vehicle with *lateral panels able*to be opened, in which the bottom is made of wood. The bottom is then provided, at its edge corresponding to the openable lateral panels, with a h-shaped metallic bracket which is fixed to the bottom above and under the same and which supports the hinges of the lateral panel themselves.

*Finally, patent* FR 1 531 601 *discloses a body of industrial vehicles in which the bottom is supported by a longitudinal element to which a j-shaped bracket is fixed for supporting the hinges of the lateral panels that can be opened.*

In this situation the technical need which forms the basis of the present invention is to provide a body for industrial vehicles which overcomes the above-mentioned disadvantages.

In particular the technical need of the present invention is to provide a body for industrial vehicles whose production costs are lower than those of traditional bodies, in terms of both material and labour, yet substantially guaranteeing the same strength as a traditional body.

Another technical need of the present invention is to provide a body for industrial vehicles in which the guard has a rounded outer edge which does not require special machining.

Yet another technical need of the present invention is to provide a body for industrial vehicles which has a greater carrying capacity than the traditional bodies.

The technical need specified and the aims indicated are substantially achieved by a body for industrial vehicles as described in the claims herein.

Further features and advantages of the present invention are more apparent in the detailed description below, with reference to the accompanying drawings, which illustrate several preferred embodiments of a body for industrial vehicles, without limiting the scope of its application, and in which:
- Figure 1 is a partial cross-section of the connecting zone for the ***bottom*** of a body and a hinged panel in the closed position, made according to the prior art;
- Figure 2 is a partial cross-section of the connecting zone illustrated in Figure 1 with the panel in the open position;
- Figure 3 is a partial cross-section of the connecting zone for the ***bottom*** of a body and a hinged panel in the closed position, made according to the present invention;
- Figure 4 is a partial cross-section of the connecting zone illustrated in Figure 3 with the panel in the open position;
- Figure 5 is a schematic plan view of a first type of body made according to the present invention;
- Figure 6 is a schematic plan view of a second type of body made according to the present invention; and
- Figure 7 is a schematic plan view of a third type of body made according to the present invention.

With reference to the accompanying drawings, the numeral 1 denotes as a whole a body for industrial vehicles according to the present invention.

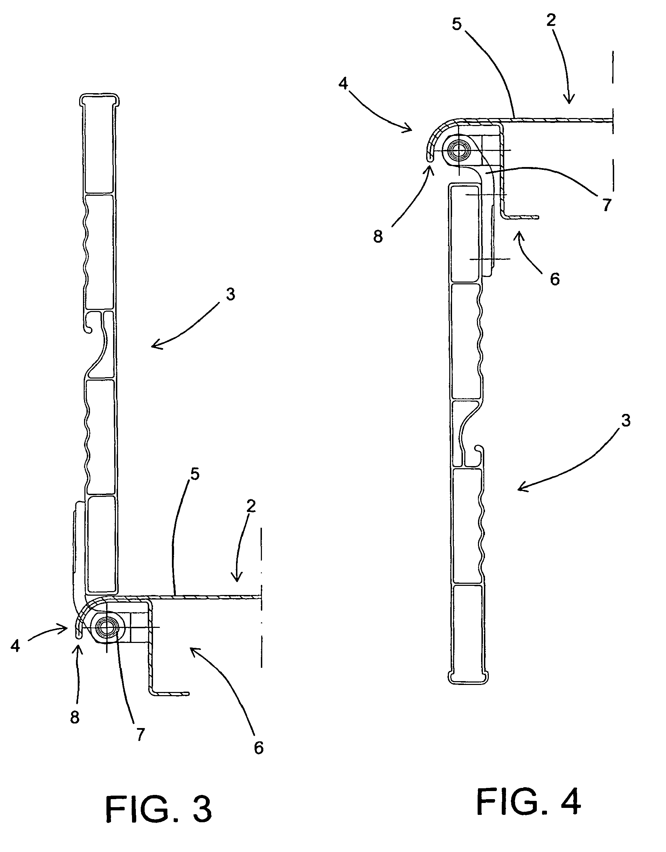

Figures 3 and 4 only illustrated the part of the body 1 corresponding to the connection between the ***bottom*** 2 of the body 1 and a generic panel 3.

The body 1 normally comprises a ***bottom*** 2 and a plurality of side panels 3, at least one of which can be opened.

At least at a panel 3 that can be opened, the ***bottom*** 2 of the body 1 forms a guard 4 which projects outwards from the body 1, located under the panel 3 that can be opened at least when said panel is in the closed position.

If it is a hinged panel 3, as illustrated in Figures 3 and 4, when the panel 3 is open the guard 4 covers the top of the panel, protecting it.

At least close to the panel 3 that can be opened to which the guard 4 is connected, the ***bottom*** 2 of the body 1 and the guard 4 consist of a single sheet 5 of material.

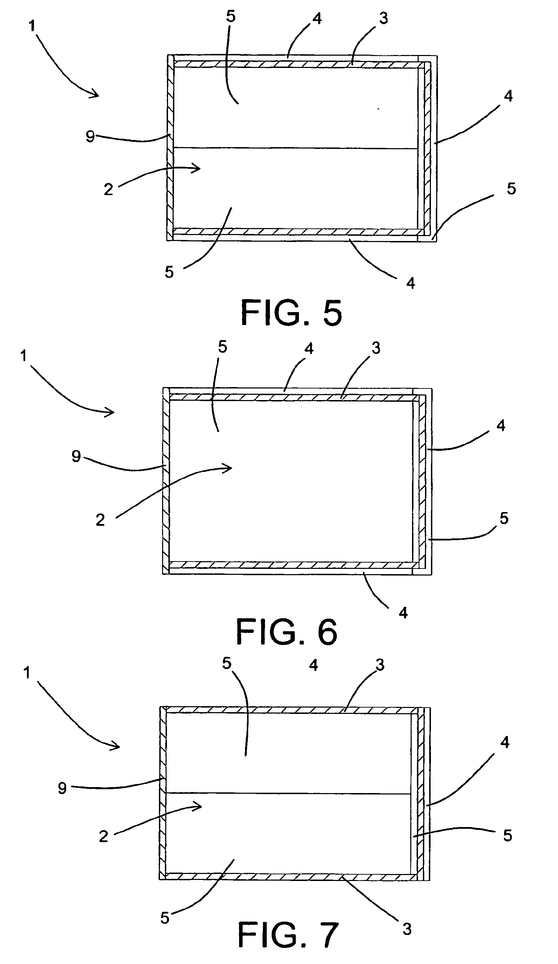

Some alternative constructions are illustrated in Figures 5 to 7.

In the case of bodies in which both the side panels 3 and the rear panel can be opened, although there is normally a guard 4 connected to the rear panel, for the two side panels 3 the guard may be present, as shown in Figures 5 and 6, or it may be absent, as shown for example in Figure 7.

In the embodiment illustrated in Figure 5 there are three guards 4 and the ***bottom*** 2 and the three guards 4 are all obtained from three sheets 5 of material, two main sheets 5 forming practically all of the ***bottom*** 2 and the two guards 4 at the side panels 3, plus a secondary sheet 5 forming the rear guard 4 and a small strip of the ***bottom*** 2 adjacent to the rear guard 4.

In contrast, in the embodiment illustrated in Figure 6, there are still three guards 4 but the ***bottom*** 2 and the three guards 4 are all obtained from only two sheets 5 of material, a main sheet 5 forming practically all of the ***bottom*** 2 and the two guards 4 at the side panels 3, plus a secondary sheet 5 forming the rear guard 4 and a small strip of the ***bottom*** 2 adjacent to the rear guard 4.

Finally, Figure 7 illustrates another alternative embodiment in which there are three sheets 5 as in Figure 5, but in which only the rear secondary sheet 5 forms a guard 4. There is no guard 4 connected to the two side panels (whether they can be opened or not).

Generally speaking, the ***bottom*** 2 of the body may comprise any number of sheets 5, at least one of which is made according to the methods described below.

According to the present invention, the guard 4 (or at least one guard 4 when the body 1 has more than one) is obtained by folding over itself the sheet 5 which, at least close to the guard 4, constitutes the ***bottom*** 2 of the body 1.

In this way, in the case of metal sheets 5, the ***bottom*** 2 may be around 2 - 4 mm thick, whilst the guard 4 may be around 4 - 8 mm thick, similarly to traditional guards 4.

In general, the thickness of the guard 4 is substantially double the thickness of the ***bottom*** 2 of the body 1 formed by the same sheet 5 of material.

Advantageously, the body 1 may also comprise at least one supporting element 6 connected under the ***bottom*** 2, close to the guard 4, and extending parallel with the guard 4.

The supporting element 6 may serve both to stiffen the body 1, and to support the hinges 7 connecting the hinged panels 3.

In the most complete embodiment of the invention, the supporting element 6 is also made from the same sheet 5 of material as the guard 4 and the ***bottom*** 2 of the body 1, folded again.

In Figures 3 and 4 the supporting element 6 has an L-shaped cross-section, but in general it may have any shape.

Thanks to the fact that it is folded over, the guard 4 has a rounded outer edge 8.

It should also be noticed that, if necessary (as illustrated in the accompanying drawings), the guard 4 may also have notches in it (not directly visible in the accompanying drawings, since the cross-section view is of the solid guard 4) which house the panel 3 hinges 7 when the panel is closed (Figure 3).

When the body 1 comprises a plurality of outer panels 3 that can be opened, the body 1 is preferably made according to the above description at each of these.

Advantageously, if there are two opposite panels 3 that can be opened (for example the two side panels 3), a single sheet 5 of material may form both the ***bottom*** 2 and the guard 4 at each of the two opposite panels 3 that can be opened.

Moreover, if necessary, the same sheet 5 can also form the supporting elements 6 connected under the ***bottom*** 2 close to each of the two guards 4, as indicated above.

If the entire structure requires further stiffening, once the guard 4 has been formed, the folded sheet may be attached to itself using a predetermined number of weld spots.

Finally, in Figures 5 to 7, the body also has a front panel 9 rigidly attached to the ***bottom*** 2.

The present invention brings important advantages.

Firstly, the production costs of the bodies made according to the present invention are lower than those of traditional bodies, in terms of both material and labour.

Thanks to the present invention, it was possible to obtain bodies which although guaranteeing substantially the same strength as a traditional body 1, have a ***bottom*** consisting of substantially half the material used for traditional bodies.

If the supporting element is made in a L-shape, at least half of the material used to make it can also be saved. However, in general the saving linked to the supporting element is even greater, since at present the supporting elements substantially have the same thickness as the ***bottom*** of the body 1.

Moreover, even the costs in terms of labour and processing time are significantly reduced, since the ***bottom,*** the guard and the supporting element can all be obtained in an automated way by means of simple operations for folding a sheet of material, preferably metal. The costs remain lower even if weld spots are used, since it is a simple, rapid operation even for inexpert personnel.

Another cause of the reduction in costs is the reduced number of parts to be produced and assembled.

Secondly, thanks to the present invention, the guard has a rounded outer edge without requiring the special subsequent machining needed by traditional guards.

Moreover, thanks to the reduced quantity of material used, it was also possible to reduce the tare of the body, consequently increasing its carrying capacity.

Thanks to the fact that the guard, the ***bottom*** of the body and the supporting element are all made using a single folded sheet, the strength of the entire structure was also increased.

## Claims

1. A body for industrial vehicles comprising a ***bottom*** (2), ***consisting of one or more sheets (5) of metallic material disposed side by side**,* and a plurality of side panels (3), at least one of the panels (3) being able to open, the ***bottom*** (2) of the body (1) forming, at least at said panel (3) that can be opened, a guard (4) projecting outwards from the body (1) under the panel (3) that can be opened when the panel is closed, and at least close to the panel (3) that can be opened, the ***same sheet of material which constitutes the bottom*** (2) of the body (1) ***constituting also*** the guard (4) the body being **characterised in that** the guard (4) is obtained by folding ***over itself*** the sheet (5) ***constituting the bottom close* to *the guard (4) itself and***
**in that** the thickness of the guard (4) is substantially double the thickness of the ***bottom*** (2) part of the body (1) ***close* to *the guard (4) .***

2. The body for industrial vehicles according to claim 1 or 2, also comprising at least one supporting element (6) connected under the ***bottom*** (2) close to the guard (4) and extending parallel with the guard (4).

3. The body for industrial vehicles according to claim **2, characterised in that** the supporting element (6) is also made from the sheet (5) of material, folded again.

4. The body for industrial vehicles according to any of the foregoing claims, **characterised in that** the guard (4) has a rounded outer edge (8).

5. The body for industrial vehicles according to any of the foregoing claims, comprising a plurality of outer panels (3) that can be opened at each of which the body (1) is made according to any of the foregoing claims.

6. The body for industrial vehicles according to any of the foregoing claims, comprising at least two opposite panels (3) that can be opened and at least one guard (4) at each of the opposite panels (3) that can be opened, each of the guards (4) being made according to any of the claims from 2 to 5.

7. The body for industrial vehicles according to claim 6, comprising at least one supporting element (6) connected under the ***bottom*** (2) close to each of the guards (4) and extending parallel with the guard (4).

8. The body for industrial vehicles according to claims 7, **characterised in that** the supporting elements (6) are also made from the sheet (5) of material, folded again.

## Patentansprüche

1. Kasten für Lastkraftfahrzeuge, enthaltend einen Boden (2), bestehend aus einem oder mehreren metallenen Blechen (5), die Seite an Seite angeordnet sind, und eine Anzahl von seitlichen Spundwänden (3), von welchen Spundwänden (3) wenigstens eine geöffnet werden kann, wobei der Boden (2) des Kastens (1) wenigstens an der genannten Spundwand (3), die geöffnet werden kann, einen Schutzfalz (4) bildet, der nach ausserhalb des Kastens (1) unter der zu öffnenden Spundwand (3) hervorsteht, wenn die Spundwand geschlossen ist, und wenigstens dicht an der zu öffnenden Spundwand (3), wobei dasselbe Blech aus Material, welches den Boden (2) des Kastens (1) bildet, auch den Schutzfalz (4) bildet, wobei der Kasten **dadurch gekennzeichnet ist, dass** der Schutzfalz (4) durch Umbiegen um sich selbst des den Boden dicht an dem Schutzfalz (4) selbst bildenden Bleches (5) erhalten ist, und **dadurch**, dass die Dicke des Schutzfalzes (4) im wesentlichen das Doppelte der Dicke des Bodens (2) als Teil des Kastens (1) dicht an dem Schutzfalz (4) ist.

2. Kasten für Lastkraftfahrzeuge nach Patentanspruch 1, ebenfalls enthaltend wenigstens ein Trägerelement (6), angeschlossen unter dem Boden (2) dicht an dem Schutzfalz (4) und sich parallel zu dem Schutzfalz (4) erstreckend.

3. Kasten für Lastkraftfahrzeuge nach Patentanspruch 2, **dadurch gekennzeichnet, dass** das Trägerelement (6) ebenfalls aus dem Blech (5) aus Material hergestellt und wiederum umgebogen ist.

4. Kasten für Lastkraftfahrzeuge nach einem jeden der vorstehenden Patentansprüche, **dadurch gekennzeichnet, dass** der Schutzfalz (4) eine abgerundete äussere Kante hat.

5. Kasten für Lastkraftfahrzeuge nach einem jeden der vorstehenden Patentansprüche, enthaltend eine Anzahl von äusseren Spundwänden (3, die geöffnet werden können, und an jeder derselben ist der Kasten (1) nach einem jeden der vorstehenden Patentansprüche hergestellt.

6. Kasten für Lastkraftfahrzeuge nach einem jeden der vorstehenden Patentansprüche, enthaltend wenigstens zwei sich gegenüberliegende Spundwände (3), die geöffnet werden können, und wenigstens einen Schutzfalz (4) an jeder der sich gegenüberliegenden zu öffnenden Spundwände (3), wobei jeder der Schutzfalze (4) nach einem jeden der Patentansprüche von 2 bis 5 hergestellt ist.

7. Kasten für Lastkraftfahrzeuge nach Patentanspruch 6, ebenfalls enthaltend wenigstens ein Trägerelement (6), angeschlossen unter dem Boden (2) dicht an jedem der Schutzfalze (4) und sich parallel zu dem Schutzfalz (4) erstreckend.

8. Kasten für Lastkraftfahrzeuge nach Patentanspruch 7, **dadurch gekennzeichnet, dass** die Trägerelemente (6) ebenfalls aus dem Blech (5) aus Material hergestellt und wiederum umgebogen sind.

## Revendications

1. Une benne pour véhicules industriels comprenant un fond (2), constitué d'une ou de plusieurs feuilles (5) de matériau métallique disposées côte à côte, et une pluralité de panneaux latéraux (3), au moins un des panneaux (3) pouvant s'ouvrir, le fond (2) de la benne (1) formant, au moins au niveau dudit panneau (3) pouvant être ouvert, un protecteur (4) saillant vers l'extérieur depuis la benne (1) sous le panneau (3) pouvant être ouvert quand ledit panneau est fermé, et au moins à proximité du panneau (3) pouvant être ouvert, la même feuille de matériau qui constitue le fond (2) de la benne (1) constituant également le protecteur (4), la benne étant **caractérisée en ce que** le protecteur (4) est obtenu en repliant sur elle-même la feuille (5) constituant le fond à proximité du protecteur (4) lui-même, et **en ce que** l'épaisseur du protecteur (4) correspond essentiellement au double de l'épaisseur de la partie du fond (2) de la benne (1) située à proximité du protecteur (4).

2. La benne pour véhicules industriels selon la revendication 1, **caractérisée en ce qu'**elle comprend au moins un élément de support (6) associé sous le fond (2) à proximité du protecteur (4) et s'étendant parallèlement audit protecteur (4).

3. La benne pour véhicules industriels selon la revendication 2, **caractérisée en ce que** l'élément de support (6) est lui aussi obtenu à partir de la feuille (5) de matériau qui est de nouveau pliée.

4. La benne pour véhicules industriels selon l'une quelconque des revendications précédentes, **caractérisée en ce que** le protecteur (4) présente un bord extérieur (8) arrondi.

5. La benne pour véhicules industriels selon l'une quelconque des revendications précédentes, **caractérisée en ce qu'**elle comprend une pluralité de panneaux (3) extérieurs pouvant être ouverts et au niveau de chacun desquels la benne (1) est réalisée selon l'une quelconque des revendications précédentes.

6. La benne pour véhicules industriels selon l'une quelconque des revendications précédentes, **caractérisée en ce qu'**elle comprend au moins deux panneaux (3) opposés pouvant être ouverts et au moins un protecteur (4) au niveau de chacun desdits panneaux (3) opposés pouvant être ouverts, chacun des protecteurs (4) étant réalisés selon l'une quelconque des revendications de 2 à 5.

7. La benne pour véhicules industriels selon la revendication 6, **caractérisée en ce qu'**elle comprend au moins un élément de support (6) associé sous le fond (2) à proximité de chacun des protecteurs (4) et s'étendant parallèlement audit protecteur (4).

8. La benne pour véhicules industriels selon la revendication 7, **caractérisée en ce que** les éléments de support (6) sont eux aussi obtenus à partir de la feuille (5) de matériau qui est de nouveau pliée.
